# EUROPÄISCHE PATENTSCHRIFT

(11) **EP 0 605 695 B1**
(45) Veröffentlichungstag und Bekanntmachung des Hinweises auf die Patenterteilung: **20.11.1996**
(21) Anmeldenummer: 93915676.6
(22) Anmeldetag: 30.07.1993
(51) Int. Cl.: B60G 17/005, B60G 11/48, B60G 17/015, F16F 9/02, B61F 5/14

(54) **SEKUNDÄRFEDERUNG FÜR SCHIENENFAHRZEUGE**
SECONDARY SUSPENSION SYSTEM FOR RAIL VEHICLES
SUSPENSION SECONDAIRE POUR VEHICULES SUR RAILS

(30) Priorität: 30.07.1992 DE 4225102
(43) Veröffentlichungstag der Anmeldung: 13.07.1994
(73) Patentinhaber: ABB Daimler-Benz Transportation (Deutschland) GmbH, 16761 Hennigsdorf (DE)
(72) Erfinder: RICHTER, Wolfgang-Dieter, D-90610 Winkelhaid (DE); UEBEL, Lutz, D-90562 Heroldsberg (DE); WEEGER, Engelbert, D-90441 Nürnberg (DE)
(86) Internationale Anmeldenummer: DE9300671
(87) Internationale Veröffentlichungsnummer: WO9403340

(56) Entgegenhaltungen:
- EP-A- 0 453 752
- AT-A- 373 847
- DE-A- 2 723 305
- FR-A- 1 576 829
- FR-A- 2 436 682
- US-A- 2 917 321
- US-A- 3 524 657
- US-A- 4 097 063

## Beschreibung

Die Erfindung betrifft eine Sekundärfederung gemäß dem Oberbegriff des ersten Anspruchs.

Eine bekannte Sekundärfederung dieser Art (FR-A-1 576 829) weist ein passives Federelement in Form von konzentrisch zueinander angeordneten Wendelfedern und ein mechanisch in Reihe geschaltetes Hubelement auf, das als Luftfederbaig ausgebildet ist und auf dem ein Wagenkasten sitzt. Der Druck im Hubelement ist dabei abhängig von der Beladung des Wagenkastens steuerbar.

Es ist bei einem Omnibus auch bekannt (EP-A-0 453 752) den über Luftfedern auf den Achsen oder Radaufhängungen abgestützten Wagenaufbau über ein achsweise geschlossenes Druckluftsystem an einer Haltestelle etwa um seine bodenseitige Längsmittelachse zu verschwenken. Dadurch ist der Wagenkasten an der die Fahrgasteinstiegtüren aufweisenden Seite auf eine gegenüber Normalniveau niedrigere Einstieghöhe absenkbar und wird gleichzeitig auf der gegenüberliegenden Seite durch Umpumpen der in den einstiegsseitigen Luftfedern verdrängten Luft angehoben. Abgesehen davon, daß eine Schrägstellung insbesondere des Wagenkastenbodens für die Standsicherheit von Personen und Transportgütern von Nachteil sein kann, kann eine Schrägstellung des Wagenkastens im ordnungsgemäßen Fahrbetrieb auch dann auftreten, wenn ein Faltenbalg leck ist.

Der Erfindung liebt die Aufgabe zugrunde, bei einer Sekundärfederung gemäß dem Oberbegriff des ersten Anspruchs Maßnahmen zu treffen, durch die eine Verringerung der Einstiegshöhe und eine gesicherte Höhenlage des Wagenkastens im Fahrbetrieb erreicht wird.

Die Lösung dieser Aufgabe erfolgt gemäß der Erfindung durch die kennzeichnenden Merkmale des ersten Anspruchs.

Bei einer Ausgestaltung einer Sekundärfederung gemäß der Erfindung wird einerseits durch Verkürzen der achsialen Länge zumindest eines ihrer Elemente die Enstieghöhe am Wagenkasten vermindert und andererseits durch eine Verriegelung des zugeordneten Hubelements in der oberen Endlage erreicht, daß der Wagenkasten auch bei einem Defekt an einem der in Serie geschalteten Federungselement noch ausreichend abgefedert bleibt. Diese Verriegelung kann über den Eingriff mindestens einer am Drehgestellrahmen drehbar gelagerten Klinke in eine umlaufende Nut des Hubzylinders erfolgen, wenn sich das Hubelement in der dem angehobenen Zustand entsprechenden Endlage befindet.

Um eine möglichst niedrige Einbauhöhe des Systems zu erreichen, werden mehrere Hubelemente in einem gemeinsamen Gehäuse nebeneinander angeordnet. Über eine ausreichende Dimensionierung kann eine begrenzte Redundanz erreicht werden, sofern hydraulische Elemente über Differenzdrucksperrventile individuell getrennt werden können. Dabei können hydraulische Elemente im Fahrbetrieb über eine Leerlaufschaltung mit integrierter Drossel als Dämpfer arbeiten.

Die Verriegelung des Hubelements ist so mit dem Hubsystem verknüpft, daß sie nur bei betriebsfähiger Anlage zum Absenken gelöst werden kann, um die Rückkehr in den angehobenen Zustand sicherzustellen. Unabhängig davon sperrt die Verriegelung auch dann, wenn das Fahrzeug von außen in eine dem angehobenen Zustand entsprechende Höhenlage gebracht wird.

Vorteilhafterweise kann bei aktiven Sekundärfedern das bei Luftfedern übliche Notfederelement als hydropneumatische Feder ausgeführt werden, die die gewünschte Funktion mit erfüllt.

Bei wiegenlosen Luftfederdrehgestellen nehmen üblicherweise Luftfederbalg und Zusatzfeder die beim Ausdrehen entstehenden lateralen Bewegungen auf. Bei Ausfall der Luftversorgung besorgt dies die Zusatzfeder alleine.

Wird ein hydropneumatisches Hubelement so ausgeführt, daß es gleichzeitig als hydropneumatische Zusatzfeder fungiert, müssen die in lateraler Richtung benötigten Notfedereigenschaften über eine innerhalb des Luftfederbalgs angeordnete querweiche Elastomerschichtfeder gewährleistet werden.

Bei Drehgestellen mit Wiege kann die gesamte Sekundärfederstufe als hydropneumatische Feder mit variablem Arbeitspunkt ausgeführt werden.

Im folgenden wird die Erfindung annand von Zeichnungen beispielhaft näher beschrieben. Dabei zeigen:
- Fig. 1) bis Fig. 6): verschiedene Ausführungen einer Sekundärfederung;
- Fig. 7) und Fig. 8): die Verriegelung eines Hubzylinders;
- Fig. 9): den Hydraulikschaltplan zu Fig. 7) und Fig. 8);
- Fig. 10): den Elektroschaltplan zu Fig. 7) und Fig. 8).

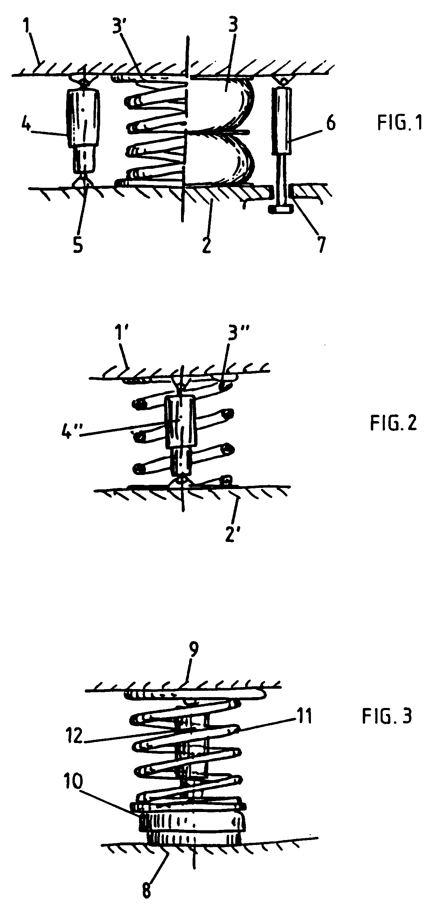

Die Sekundärfeder gemäß Fig. 1 ist zwischen dem Wagenkasten 1 und dem Drehgestellrahmen 3 angeordnet, wobei diese als Elastomerfeder 3 oder Schraubenfeder 3' ausgeführt sein kann. Symmetrisch zu der Achse der Sekundärfeder sind paarweise Spannelemente angeordnet, die über kardanisch bewegliche Anlenkungen 5 mit dem Wagenkasten 1, bzw. dem Drehgestellrahmen 3 verbunden sind. Die Spannelemente können als Hydraulikzylinder 4 oder elektromechanische Stellelemente 6 ausgeführt sein, wobei bei den elektromechanischen Stellelementen 6 über Führung 7 ein für die Arbeitsspiele der Sekundärfederung erforderlicher Totweg vorgesehen ist.

Fig. 2 zeigt eine Ausführung der Sekundärfederung als Schraubenfeder 3'' zwischen Wagenkasten 1' und Drehgestellrahmen 2', wobei ein Spannelement 4'' koaxial innerhalb der Schraubenfeder 3'' angeordnet ist.

Gemäß Fig. 3 sind zwischen Wagenkasten 9 und Drehgestellrahmen 8 eine Schraubenfeder 11 und ein Hubzylinder 10 in Reihe geschaltet und es ist, wie zu Fig. 2 beschrieben, ein Spannelement 12 innerhalb der Schraubenfeder 11 angeordnet.

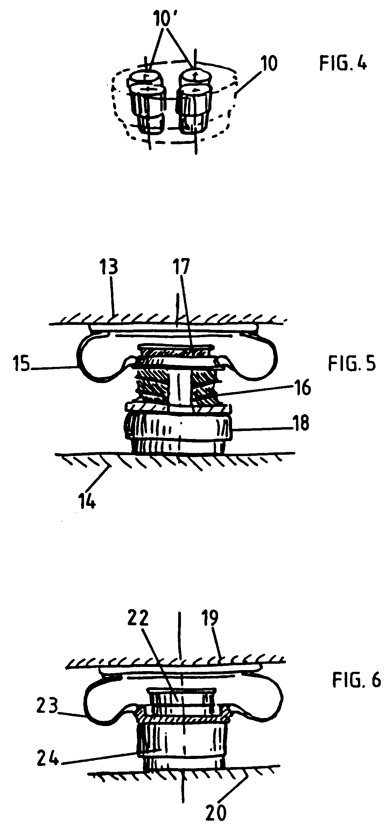

Fig. 4 zeigt die Ausführung eines Hubelements 10, bei dem in einem Gehäuse mehrere parallel geschaltete Hydraulikzylinder 10' angeordnet sind.

In Fig. 5 ist die Anordnung eines Luftfederbalges 15 gezeigt, der zwischen Wagenkasten 13 und Drehgestellrahmen 14 mit einer Zusatzfeder 16 und einem Hubzylinder 18 in Reihe geschaltet ist. Innerhalb des Luftfederbalges 15 ist eine Notfeder 17 angeordnet.

Fig. 6 zeigt eine Ausführung gemäß Fig. 5, bei der die Zusatzfeder entfällt, wobei aber das zwischen dem Wagenkasten 19 und dem Drehgestellrahmen 20 mit dem Luftfederbalg 23 in Reihe geschaltete Hubelement 24 als hydropneumatische Feder ausgeführt ist. Innerhalb des Luftfederbalgs 23 ist eine Notfeder 22 angeordnet.

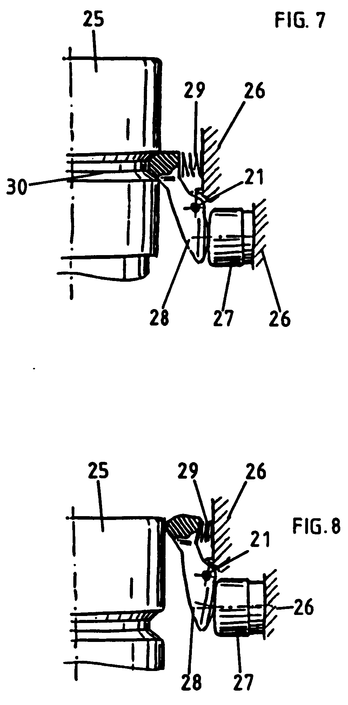

Fig. 7 und Fig. 8 zeigen die Verriegelung eines Hubzylinders 25 in verriegelter und entriegelter Stellung. Der Hubzylinder 25 ist hierzu mit einer umlaufenden Nut 30 versehen, in welche die Nase einer Klinke 28, die über eine Lagerung 21 drehbar am Drehgestellrahmen 26 befestigt und über eine Feder 29 gegen den Hubzylinder 25 vorgespannt ist, einrastet. Über einen Hydraulikzylinder 27 wird die Klinke 28 gegen die Vorspannkraft der Feder 29 beim Entriegelungsvorgang aus der Nut 30 herausgedreht.

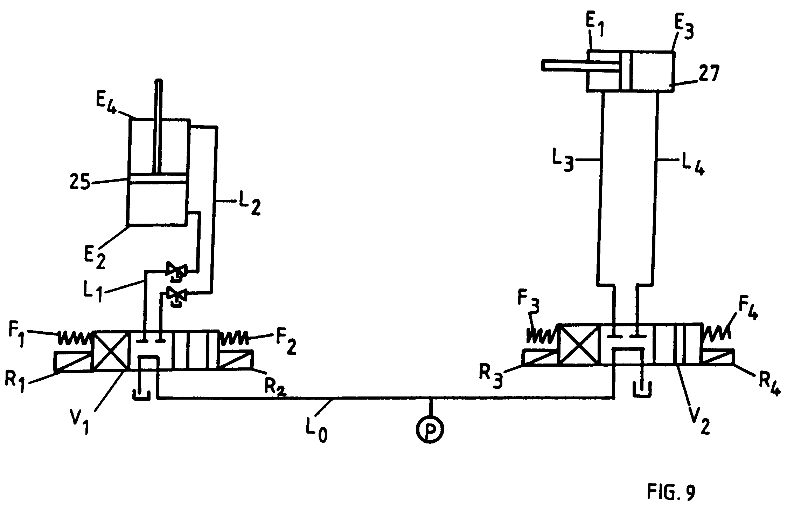

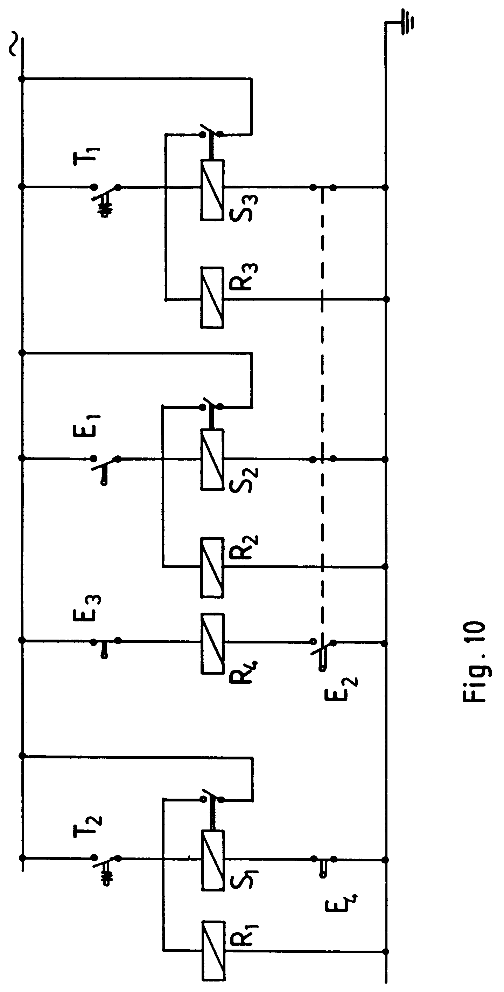

In Fig. 9 und Fig. 10 ist dargestellt, wie die in Fig. 7 und Fig. 8 gezeigte Verriegelung des Hubzylinders schaltungstechnisch mit der Betätigung des Hubzylinders verknüpft ist. Beim Halt an einer Haltestelle erfolgt der Senkvorgang des Wagenkastens in folgender Weise: über einen Taster T1, der mit der Türfreigabetaste verknüpft oder identisch sein kann, werden ein Servorelais S3 und mit diesem das Betätigungsrelais R3 des Hydraulikventils V2 aktiviert. Damit werden die Leitungen L0 und L4 verbunden, wobei L0 die druckführende Versorgungsleitung darstellt, und damit der Kolben des Verriegelungszylinders 27 nach links verschoben, bis der Endschalter E1 erreicht wird. Damit ist die Verriegelung geöffnet. Die Betätigung des Endschalters E1 führt zur Aktivierung des Servorelais S2 und des Betätigungsrelais R2 am Hydraulikventil V1. Die dadurch erreichte Verbindung der Leitungen L0 und L2 führt zum Senken des Kolbens des Hydraulikzylinders 25 bis zum Erreichen des Endschalters E2. Damit ist der Senkvorgang abgeschlossen. Mit Betätigung des Endschalters E2 werden die Servorelais S3 und S2 und damit die Betätigungsrelais R3 und R2 deaktiviert. Über die Federn F4 und F1 der Hydraulikventile V2 und V1 werden diese in ihre Ruhelage gebracht und damit die Leitungen L4 und L2 abgesperrt. Damit verbleiben die Kolben der Hydraulikzylinder 27 und 25 in den beschriebenen Endstellungen. Gleichzeitig wird über den Endschalter E2 das Betätigungsventil R4 des Hydraulikzylinders V2 aktiviert. Dadurch werden die Leitungen L0 und L3 miteinander verbunden und der Kolben des Hydraulikzylinders 27 kehrt in seine Ausgangsposition zurück. Hier betätigt er den Endschalter E3, wodurch das Betätigungsrelais R4 wieder deaktiviert wird. Über die Feder F3 wird das Hydraulikventil V2 in seine Ruhelage gebracht. Dadurch werden die Leitungen L3 und L4 abgesperrt und der Kolben verbleibt in einer dem Verriegelungszustand entsprechenden Stellung. Damit wird gewährleistet, daß der hierzu über handbetätigte Ventile drucklos geschaltete Hubzylinder 25 bei Ausfall der Druck- oder Energieversorgung durch äußere Einwirkung wieder angehoben werden kann und die Verriegelung über die Feder 29 einrastet. Der Hubvorgang erfolgt in folgender Weise: über Betätigung des Tasters T2, der mit der Türverriegelungstaste verknüpft oder identisch sein kann, werden das Servorelais S1 und das Betätigungsrelais R1 aktiviert. Dadurch werden die Leitungen L0 und L1 miteinander verbunden und der Kolben des Hydraulikzylinders 25 angehoben. Bei Erreichen des Endschalters E4 werden das Servorelais S1 und das Betätigungsrelais R1 deaktiviert und das Hydraulikventil V1 über die Feder F2 in seine Ruhelage gebracht. Dadurch werden die Leitungen L1 und L2 abgesperrt und der Kolben des Hydraulikzylinders 25 verbleibt in seiner oberen Endstellung. Vorteilhafterweise sind zwei Klinken 28 gegenüberliegend auf den Hubzylinder einwirkend angeordnet.

## Patentansprüche

1. Eine zwischen Wagenkasten und Drehgestellrahmen eines Schienenfahrzeugs angeordnete Sekundärfederung, wobei die Federung ein passives Federelement (3, 3', 3'', 11, 15, 23) und ein in Reihe geschaltetes Hubelement (10, 18, 24, 25) aufweist,
**dadurch gekennzeichnet**,
daß das hydraulische, hydropneumatische oder elektromechanische Hubelement mittels eines Senkvorganges ein Absenken des Wagenkastens an einer Haltestelle ermöglicht, und
daß das Hubelement mit einer Verriegelung der oberen Endlage ausgerüstet ist.

2. Sekundarfederung nach Anspruch 1,
dadurch gekennzeichnet,
daß zwischen dem Luftfederbalg (15) und dem Hubelement (18) eine elastomere Zusatzfeder (16) angeordnet ist.

3. Sekundärfederung nach Anspruch 1 oder 2,
dadurch gekennzeichnet,
daß innerhalb des Luftfederbalgs (15, 23) eine elastomere Notfeder (17, 22) angeordnet ist.

4. Sekundärfederung nach Anspruch 1 oder einem der folgenden,
dadurch gekennzeichnet,
daß die Verriegelung über den Eingriff mindestens einer am Drehgestellrahmen (26) drehbar gelagerten Klinke (28) in eine umlaufende Nut (30) des Hubzylinders (25) erfolgt.

## Claims

1. A secondary suspension system arranged between the wagon body and bogie frame of a rail vehicle, the suspension system having a passive spring element (3, 3', 3'', 11, 15, 23) and a lifting element (10, 18, 24, 25) connected in series, characterised in that the hydraulic, hydropneumatic or electromechanical lifting element enables the wagon body to be lowered at a station stop by means of a lowering procedure, and in that the lifting element can be locked in the upper limit position.

2. A secondary suspension system according to Claim 1, characterised in that an elastomeric auxiliary spring (16) is arranged between the air spring bellows (15) and the lifting element (18).

3. A secondary suspension system according to Claim 1 or 2, characterised in that an elastomeric emergency spring (17, 22) is arranged inside the air spring bellows (15, 23).

4. A secondary suspension system according to Claim 1 or one of the following claims, characterised in that the locking is effected by means of engagement of at least one catch (28), rotatably mounted on the bogie frame (26), into a circular groove (30) of the lifting cylinder (25).

## Revendications

1. Suspension secondaire, disposée entre la caisse et le châssis de bogie d'un véhicule ferroviaire, dans lequel la suspension est un élément de ressort passif (3, 3', 3'', 11, 15, 23) et comporte un élément de levage (10, 18, 24, 25) monté en série, caractérisé en ce que l'élément de levage hydraulique, hydropneumatique ou électropneumatique permet, grâce à un processus d'abaissement, un abaissement de la caisse lors d'un arrêt, et en ce que l'élément de levage est équipé d'un verrouillage de la position finale supérieure.

2. Suspension secondaire selon la revendication 1, caractérisé en ce qu'un ressort additionnel élastomère (16) est disposé entre le coussinet d'air (15) et l'élément de levage (18).

3. Suspension secondaire selon la revendication 1 ou 2, caractérisé en ce qu'un ressort de secours élastomère (17, 22) est disposé à l'intérieur du coussinet d'air (15, 23).

4. Suspension secondaire selon la revendication 1 ou l'une quelconque des suivantes, caractérisé en ce que le verrouillage est réalisé par l'intermédiaire de la pénétration, dans une gorge périphérique (30) du vérin de levage (25), d'un cliquet (28) logé en rotation sur le châssis de bogie (26).
